# EUROPÄISCHE PATENTSCHRIFT

(11) **EP 1 546 524 B1**
(45) Veröffentlichungstag und Bekanntmachung des Hinweises auf die Patenterteilung: **20.02.2008**
(21) Anmeldenummer: 03798857.3
(22) Anmeldetag: 10.07.2003
(51) Int. Cl.: F02B 37/16, F02B 33/44

(54) **VORRICHTUNG ZUR VERDICHTUNG VON VERBRENNUNGSLUFT MIT INTEGRIERTER UMGEHUNGSEINRICHTUNG**
DEVICE FOR COMPRESSING COMBUSTION AIR WIT AN INTEGRATED BYPASS DEVICE
DISPOSITIF POUR COMPRIMER DE L'AIR DE COMBUSTION AVEC DISPOSITIF DE DERIVATION INTEGRE

(30) Priorität: 27.09.2002 DE 10245336
(43) Veröffentlichungstag der Anmeldung: 29.06.2005
(73) Patentinhaber: ROBERT BOSCH GMBH, 70442 Stuttgart (DE)
(72) Erfinder: BOLZ, Martin-Peter, 77815 Buehl (DE); BAEUERLE, Michael, 71254 Ditzingen-Heimerdingen (DE); ZSCHWEIGERT, Ken, 76359 Marxzell-Burbach (DE); WINKLER, Gunter, 70176 Stuttgart (DE)
(86) Internationale Anmeldenummer: PCT/DE2003/002308
(87) Internationale Veröffentlichungsnummer: WO 2004/031556

(56) Entgegenhaltungen:
- WO-A-99/17008
- GB-A- 1 535 677
- GB-A- 2 077 354
- US-A- 2 311 936
- US-A- 4 823 758
- US-A- 5 730 586

## Beschreibung

### Stand der Technik

Die Erfindung betrifft eine Vorrichtung zur Verdichtung von Verbrennungsluft, insbesondere eine Vorrichtung für eine kraftfahrzeugtechnische Verbrennungsmaschine mit den Merkmalen des Oberbegriffs des Anspruchs 1.

Es ist bekannt, die Leistungsdichte einer Brennkraftmaschine durch Verdichtung der zur Verbrennung des Kraftstoffes benötigten Ladeluft mittels eines Abgasturboladers zu erhöhen. Der Abgasturboladers weist eine Turbine auf, die im Abgasstrom des Verbrennungsmotors angeordnet ist und einen, in der Ladeluftzuführung der Brennkraftmaschine angeordneten Verdichter antreibt.

Abgasturbolader weisen insbesondere bei Kraftfahrzeugantrieben den Nachteil eines verzögerten und unzureichenden Ansprechverhaltens bei niedrigeren Drehzahlen der Brennkraftmaschine auf ("Turboladerloch").

Zur Verbesserung der Ladeluftzuführung, speziell bei niedrigeren Drehzahlen der Brennkraftmaschine, ist es bekannt, den Abgasturbolader mittels eines elektrischen Hilfsantriebes zu unterstützen. Dies kann beispielsweise durch einen in den Abgasturbolader integrierten Motor erreicht werden. Dieser Motor treibt dann, bei niedrigeren Drehzahlen der Brennkraftmaschine, die Welle des Abgasturboladers unterstützend an. Eine solche Konfiguration bedingt jedoch sowohl eine hohe Drehzahlbelastbarkeit des Motors, als auch einen hohen elektrischen Leistungsbedarf der Vorrichtung aufgrund der hohen Massenträgheitsmomente der zumeist in hitzebeständigem Stahl ausgeführten Turbine des mit einem Hybrid-Antrieb versehenen Abgasturboladers.

Zur Vermeidung dieser Nachteile ist beispielsweise aus der US 6,029,452 bekannt, einen separaten, rein elektrisch betriebenen Hilfslader (elektrischer Zusatzverdichter, EZV) in der Ladeluftzufiihrung einer Brennkraftmaschine in Reihe mit einem konventionellen Abgasturbolader zu betreiben. Diese Anordnung hat den Vorteil, dass der separat in der Ladeluftzuführung eingesetzte, elektrische Zusatzverdichter auf einen Einsatz im untersten Drehzahlbereich der Brennkraftmaschine optimiert werden kann. Im hohen Drehzahlbereich der Brennkraftmaschine, der seinerseits zu einer hohen Drehzahl des Verdichters des Abgasturboladers und damit zu einem hohen Durchsatz an Ladeluft durch den nachgeschalteten Abgasturbolader führt, wird der elektrische Zusatzverdichter durch eine Bypassleitung, die die Ladeluft unter Umgehung des in diesem Drehzahlbereich nicht mehr benötigten, elektrischen Zusatzverdichter direkt dem Kompressor des Abgasturboladers zugeführt, umgangen.

Aus der US 5,904, 471 ist bekannt, einen solchen Bypasskanal direkt in den elektrischen Zusatzverdichter zu integrieren. Der im Gehäuse des Verdichters der US 5,904,471 vorgesehene Bypasskanal verbindet die Ansaugöffnung des Verdichters mit einem hochdruckseitigen Verdichterausgang unter Umgehung des Verdichterrades. Der Bypasskanal dieses Verdichters wird gebildet durch ein Klappenventil, welches über ein VerStellgestänge durch einen elektromagnetischen Aktuator gestellt werden kann. Aufgrund des geringen Strömungsquerschnittes, den die Bypassklappe der US 5,904,471 im Bypassbetrieb des Verdichters freigibt, entsteht ein erheblicher Druckverlust während dieser Betriebsart des Verdichters. Eine derartige Bypasslösung ist jedoch hinsichtlich der thermodynamischen Anforderungen nicht optimal und unter Berücksichtigung der Anforderungen an Montage, Größe und Kosten eines Gesamtsystems zur Ladeluftverdichtung sehr aufwändig und teuer. Zudem verursacht das Anbringen eines externen Stellers zum selektiven Zuschalten des Strömungsbypasses einen erheblichen Mehraufwand und damit verbunden deutlich höhere Herstellungskosten eines solchen Zusatzverdichters.

Insbesondere ergeben sich bei einer Bypasslösung gemäß der US 5,904,471 erhöhte Strömungswiderstände, da im Strömungskanal durch das ausgebildete Klappenventil Ecken bzw. Kanten vorhanden sind, die zu turbulenten Strömungsverhältnissen führen. Die turbulenten Strömungsverhältnisse können zu unerwünschten Geräuschen führen, die sich zudem auch durch die externe Betätigung der Klappeneinheit des Bypasses ergeben. Die notwendige Verwendung von zusätzlichen Bauteilen zur Ansteuerung des Bypasses und der damit einhergehende größere Platzbedarf für den Einbauraum eines solchen Zusatzverdichters sind Beispiele für die angesprochenen Nachteile dieser Bypasslösung.

Aus der DE 100 38 244 A1 ist ein Abgasturbolader für Brennkraftmaschinen bekannt, der einen, den Lader bzw. den Verdichter steuerbar umgehenden Bypass besitzt. Zur Vereinfachung und Verkürzung der Bypass-Leitungen wird in der DE 100 38 244 A1 vorgeschlagen, dass das Lader- bzw. Verdichtergehäuse einen einstückig angeordneten, bogenförmig gestalteten Zuström-Stutzen aufweist, der mit einem sich im Bogenabschnitt des Stutzens über eine Wanddurchbrechung sich im Wesentlichen tangential anschließenden Bypassstutzen in Verbindung steht.

Die Ausgestaltung der Bypassführung des Abgasturboladers in der DE 100 38 244 A1 bewirkt eine gute Funktionalität für den Bypassbetrieb, jedoch ergibt sich ein problematischer Verdichterbetrieb durch einen 90°-Krümmer (Stutzen) unmittelbar stromauf der Ansaugung des Verdichters. Darüber hinaus benötigt auch der Bypasskanal der DE 100 38 244 A1 einen externen Stellantrieb zur Positionierung der Bypassklappe.

Die US 4,823,758 beschreibt ein mechanisches Aufladegebläse, welches ein Gehäuse mit einer Eintritts- sowie einer Austrittsöffnung umfasst und einen in dem Gehäuse ausgebildeten, die Eintritts- sowie Austrittsöffnung untereinander verbindenden Umgehungskanal sitzt, In dem Umgehungskanal ist eine Entlastungsventilanordnung vorgesehen, um einen an der Austrittsöffnung herrschenden Luftdruck zur Eintrittsöffnung hin abzugeben. Steigt der Ladedruck an der Austrittsöffnung des Aufladegebläses der US 4,823,758 über einen vorbestimmten Wert hinaus an, so öffnet die Entlastungsventilanordnung, sodass der Ladedruck durch den Entlastungskanal von der Austrittsseite auf die Eintrittsseite abgeführt wird, womit der Druck an der Austrittsseite auf einen konstanten Wert gehalten wird.

Aus der GB 2 077 354 A ist ein Turbolader für Brennkraftmaschinen bekannt, der ein Ansaugrohr besitzt, in dem eine Drosselklappe angebracht ist Der Abgasturbolader der GB 2 077 354 A weist eine turbinengetriebene Zentrifugal-Kampressoreinheit auf, die ein Kompressorgehäuse mit einer Rotorkammer, einen Ansaugkanal, einen Austrittskanal und einen unter Umgehung der Rotorkammer von dem Austrittskanal zu dem Ansaugkanal führenden Kompressor-Bypasskanat umfasst In dem Bypasskanal ist ein, bei Verschließen der Drosselklappe, öffnendes Kompressor-Bypassventil angebracht. Der Bypasskanal weist wenigstens einen Austrittsbereich auf, der in dem Ansaugkanal mündet und zur Vermeidung von Druckwellen in dem Turbolader tangential zu einem in der Rotorkammer angebrachten Kompressorrotor angeordnet ist.

Aus der US 5,730,586 ist ein Kompressor mit eingebauter Ausweichleitung bekannt Der Kompressor zum Verdichten von Ansaugluft für einen Motor, der ein Gehäuse, an dessen ansaugseitiger Fläche eine Ansaugöffnung mündet und dass eine Auslassöffnung auf der anderen Seite des Gehäuses und ein paar ineinander eingreifende Drehkolben zum Verdichten von Ansaugluft, aufweist, die durch die Ansaugöffnung angesaugt wird, um die verdichtete Luft einem Motor über die Auslassöffnung zuzuführen. Das Gehäuse weist in seinem Inneren einen Verbindungskanal zum Herstellen einer Verbindung Zwischen der Ansaugöffnung und der Auslassöffnung auf. Der Kompressor weist ebenfalls ein Ausweichventil zum Öffnen und Schließen des Verbindungskanals und ein Stellglied zum Betätigen des Ausweichventils auf.

Die US 2, 311,936 offenbart einen Ladeluftverdichter in Form eines Roots-Verdichters. Der Verdichter weist dabei einen Bypass auf, welcher ein Ventil besitzt, das es ermöglicht, ein Übermaß an verdichteter Ladeluft von der Auslassseite des Verdichters zurück zur Einlassseite des Verdichters zu transportieren. Dabei wird das Bypassventil entsprechend der Drehzahl des Verbrennungsmotors gesteuert.

Aus der WO 99/17008 ist ein Ladeluftsystem insbesondere für den Verbrennungsmotor eines Kraftfahrzeuges bekannt, bei dem neben einem Abgasturbolader ein elektrisch angetriebener Zusatzverdichter eingesetzte wird. Der Zusatzverdichter ist derart in das Ladeluftsystem integriert, dass zu verdichtende Luft mittels des Zusatzverdichters - insbesondere bei noch geringen Drehzahlen des Verbrennungsmotors - mittels des elektrischen Ladeluftverdichters vorverdichtet werden kann.

Darüber hinaus kann der elektrische Ladeluftverdichter über einen Bypasskanal des Ladeluftsystems umgangen werden, um den Strömungswiderstand, den der elektrische Ladeluftverdichter darstellt, zu reduzieren. Über ein im Ladeluftsystem vorhandenes Rückschlagventil kann der parallel zum Zusatzverdichter angeordnete Bypasskanal verschlossen werden. Die Schließung des Bypasskanals erfolgt dabei durch den vorverdichteten Ladeluftstrom.

### Vorteile der Erfindung

Der erfindungsgemäße, elektrisch angetriebene Ladeluft-Verdichter mit den Merkmalen des Anspruchs 1 vermeidet die im Stand der Technik bei den Abgasturboladern auftretenden Nachteile und ermöglicht es so, einen elektrischen Turboverdichter in der Ladeluftauführung einer Brennkraftmaschine in Reihe mit einem Abgasturbolader zu betreiben, ohne dass eine externe Ansteuerung zur Betätigung eines im Zusatzverdichters integriertem Bypasskanal notwendig wäre.

Dadurch, dass der Bypasskanal des erfindungsgemäßen Zusatzverdichters ein Ventil aufweist, welches selbststellend ist, kann auf einen externen Aktuator vollständig verzichtet werden.

Der erfindungsgemäße elektrische Zusatzverdichter ermöglicht somit eine platzsparende und kostengünstige Ausführung, so dass ein kompakter, sich selbst stellender Zusatzverdichter mit einfachen Mitteln realisiert werden kann.

Vorteilhafte Weiterbildungen und Ausführungsbeispiele der Erfindung werden durch die in den Unteransprüchen enthaltenen Merkmale ermöglicht.

In vorteilhafter Weise wird das im Bypasskanal des erfindungsgemäßen Zusatzverdichters angeordnete Ventil aufgrund einer Druckdifferenz zwischen dem Einlasskanal und dem Auslasskanal der Verdichteranordnung gestellt.

Dazu besitzt das sich selbst stellende Ventil des Bypasskanals eine erste Schaltfläche, die von einem, durch den Bypasskanal tretenden Volumenstrom beaufschlagbar ist, sowie eine zweite Schaltfläche, die von einem Volumenstrom, der durch den Auslasskanal tritt, beaufschlagbar ist. Eine Druckdifferenz dieser beiden Volumenströme regelt selbsttätig die Stellung des Ventils im Bypasskanal, so dass das Ventil zwischen einer ersten Position, die den Bypasskanal verschließt und einer zweiten Position, die den Bypasskanal öffnet, selbsttätig wechseln kann.

Dabei ist das im Bypasskanal angeordnete Ventil als ein Rückschlagventil ausgebildet, welches im aktiven Verdichterbetrieb der erfindungsgemäßen Vorrichtung, die einlasskanalseitige Öffnung des Bypasskanals verschließt, so dass ein Rückströmen der verdichteten Luft durch den Bypasskanal zurück in den Einlasskanal verhindert wird. Es entsteht eine geschlossene Strömungsführung für den Verdichterbetrieb, ohne dass ein Leckagemassenstrom den Wirkungsgrad der Vorrichtung herabsetzt. Ist der Verdichter nicht in Betrieb, so stellt die anliegende Druckdifferenz das Bypassventil so, dass zusätzlich zum Strömungskanal des Zusatzverdichters der integrierte Bypasskanal durchströmt werden kann.

In einer vorteilhaften Ausführungsform des erfindungsgemäßen elektrischen Zusatzverdichters weist das Verdichtergehäuse einen in axialer Richtung verlaufenden, den Einlasskanal der Vorrichtung bildenden Einlassstutzen auf. In vorteilhafter Weise zweigt der Bypasskanal von diesem, axial verlaufenden Einlassstutzen ab. Auf diese Weise wird in dem erfindungsgemäßen Zusatzverdichter eine gerade, in axialer Richtung verlaufende Ansaugstrecke realisiert, die einen möglichst ströinungsoptiinalen, d.h. verlustarmen Verdichterbetrieb, gewährleistet. Aufgrund eines solchen verlustarmen Verdichterbetriebes ist es in vorteilhafter Weise möglich, den erfindungsgemäßen Ladeluftverdichter mit der begrenzten Antriebsleistung beispielsweise des Bordnetzes eines Kraftfahrzeuges zu betreiben.

In einem Ausführungsbeispiel des erfindungsgemäßen Zusatzverdichters zweigt der Bypasskanal im Wesentlichen tangential von dem Einlassstutzen des Verdichters ab. In diesem Ausführungsbeispiel ist es möglich, ein hohes Kühlungsvolumen für Wärmequellen des Antriebs durch den Bypasskanals zu realisieren, da große Oberflächen von der angesaugten Ladeluft, insbesondere bei abgeschalteten Verdichter, überströmt werden. Darüber hinaus zeichnet sich der tangential abzweigende Bypasskanal durch einen aerodynamisch sehr verlustarme Strömungsführung aus, so dass die von einem nachgeschalteten Abgasturbolader durch den Zusatzverdichter hindurch angesaugte Verdichtungsluft im passiven Zusatzverdichter nur einen sehr geringen Luftwiderstand erfährt.

In einem alternativen Ausführungsbeispiel des erfindungsgemäßen Zusatzverdichters zweigt der Bypasskanal im Wesentlichen senkrecht vom Einlassstutzen ab. In dieser Ausgestaltung ermöglicht der erfindungsgemäße Zusatzverdichter einen sehr kompakten Aufbau aufgrund der platzsparenden Ausführung. Der durch die starke Luftumlenkung erzeugte erhöhte Strömungswiderstand im Bypassbetrieb dieses Ausführungsbeispiels wird zum Teil durch den deutlich kürzeren Bypasskanal wieder aufgefangen. Darüber hinaus stellt diese platzsparende Ausführung durch integrierte Bauweise der kompakten Leitungsführung einen nicht zu vernachlässigenden Vorteil bei einem begrenzten Einbauvolumen dar.

In vorteilhafter Weise mündet der hochdruckseitige Auslasskanal der Vorrichtung in den Bypasskanal. Auf diese Weise ist es möglich, eine sehr platzsparende, kompakte Leitungsführung für den Anschluss des erfindungsgemäßen Zusatzverdichters zu realisieren.

In einem besonders vorteilhaften Ausführungsbeispiel des erfindungsgemäßen Zusatzverdichters ist das, den Bypasskanal steuernde Ventil durch ein Klappenventil realisiert. Das Klappenventil, welches insbesondere eine exzentrische Lagerung im Bypasskanal aufweisen kann, lässt sich bereits bei geringsten Druckdifferenzen stellen. Das Ausmaß der Exzentrizität der Bypassktappentagerung sowie die Dichte des Klappenmaterials ermöglichen je nach Einbaulage die Variation des zum Stellen des Bypasskanals erforderlichen Überdrucks. Bei geeigneter Dimensionierung, beispielsweise auch mit Hilfe geeigneter Klappenanschläge zur Begrenzung der beiden Endstellungen in der Ventilklappe kann ein einbaulagenunabhängiges Verhalten der Ventilklappe herbeigeführt werden. Durch ein exzentrisch gelagerte Klappenventil ist die Freigabe großer Querschnitte im Bypasskanal möglich, so dass insbesondere im Bypassbetrieb des erfindungsgemäßen Zusatzverdichters große Strömungsquerschnitte und damit eine aerodynamisch verlustarme Ausführung für den elektrischen Zusatzverdichter realisiert werden kann. Die geringe Massenträgheit einer solchen Rückschlagsklappe ermöglicht in vorteilhafter Weise eine hohe Stellgeschwindigkeit und zudem eine entsprechend hohe Stellsicherheit für das System. Durch die Verwendung geeigneter Auswuchtverfahren für die Rückschlagklappe des Bypasskanals kann ein einbaulagenunabhängiges Schaltverhalten herbeigeführt werden. Über die Anordnung der Drehachse der Rückschlagsklappe lässt sich das Schaltverhalten des Ventils für den Bypasskanal optimieren.

In einem alternativen Ausführungsbeispiel kann das Stellventil für den Bypasskanal durch ein Membranventil realisiert werden. Das Membranventil, beispielsweise in Form einer Tellermembran, kann auf einfache Weise aus einem entsprechenden Elastomer hergestellt werden und wird im aktiven Zustand des Zusatzverdichters infolge des Druckaufbaus des Verdichters in die Schließposition gedrückt, während die Membran im inaktiven Zustand durch die Bypassströmung in ein geöffnete Stellung gezwungen wird. In vorteilhafter Weise kann eine solche Membran beispielsweise zwischen zwei Teilen des Verdichtergehäuses eingespannt sein, so dass sich mit einfachsten Mitteln eine Schaltfunktion für einen im Verdichtergehäuse integrierten Bypasskanal realisieren lässt. Das durch eine Membran realisierte Schaltventil für den Bypasskanal des erfindungsgemäßen Zusatzverdichters zeichnet sich durch extrem kleine Schaltzeiten und eine hohe Zuverlässigkeit aus. Darüber hinaus bietet das Membranventil ein nahezu geräuschfreies Schaltverhalten. Das Membranventil ist vorzugsweise lamelliert bzw. auf eine andere Art radial verformbar ausgestaltet.

In weiteren vorteilhaften Ausführungsformen des erfindungsgemäßen Zusatzverdichters kann das Ventil der im Zusatzverdichter integrierten Bypassleitung auch als ein Kugelventil ausgestaltet sein. Insbesondere ist die Verwendung eines Mehrfach-Kugelventils von Vorteil. Dazu befinden sich am inneren Umfang des Einlassstutzens eine Mehrzahl von Hohlkugeln, die entsprechende Öffnungen im Umfang des Einlassstutzens druckabhängig freigeben oder verschließen. Durch diese Öffnungen wir eine Verbindung des Einlasskanals in den Bypasskanal ermöglicht.

In vorteilhafter Weise lässt sich der Bypasskanal der erfindungsgemäßen Vorrichtung einstückig mit dem Gehäuse des Verdichters ausbilden.

Eine Vorrichtung mit einem oder mehreren der vorgenannten Merkmale eignet sich insbesondere zur Verwendung als elektrischer Zusatzverdichter in einem System von Verdichtern zur Ladeluftkompression. Das Verdichterrad wird in diesem Fall von einem Motor angetrieben, der in vorteilhafter Weise als ein beispielsweise in das Gehäuse der Vorrichtung integrierter Elektromotor ausgebildet ist. Durch die Anordnung des Elektromotors in Strömungsrichtung des Fördermediums hinter dem Verdichterrad, lässt sich in vorteilhafter Weise erreichen, dass das Motorgehäuse in thermischer Verbindung mit dem Bypasskanal steht, so dass eine derartige Vorrichtung ein hohes Kühlvermögen für die Wärmequellen des Antriebs ermöglicht. Durch das Überströmen großer Oberflächen der Vorrichtung, insbesondere auch während des Bypassbetriebs, lässt sich so in vorteilhafter Weise eine zusätzliche Kühlung der hochtourigen Vorrichtung durch die Ladeluft selbst erreichen. Insbesondere ein im Wesentlichen tangential von dem Einlassstutzen des Einlasskanals abzweigender Bypasskanal kann über einen großen Bereich in thermischen Kontakt mit dem Gehäuse des antreibenden Motors gebracht werden.

Weitere Vorteile der erfindungsgemäßen Vorrichtung zur Verdichtung von Verbrennungsluft sind der nachfolgenden Zeichnung sowie der Beschreibung einiger zugehöriger Ausführungsbeispiele zu entnehmen.

### Zeichnungen

In der Zeichnung sind mehrere Ausführungsbeispiele der erfindungsgemäßen Vorrichtung zur Verdichtung von Verbrennungsluft dargestellt, die in der nachfolgenden Beschreibung näher erläutert werden. Die Figuren der Zeichnung, deren Beschreibung sowie die darauf gerichteten Ansprüche enthalten zahlreiche Merkmale in Kombination. Ein Fachmann wird diese Merkmale auch einzeln betrachten und zu sinnvollen, weiteren Kombinationen zusammen fassen.

Es zeigen:
- Figur 1: einen Querschnitt durch einen elektrisch angetriebenen Ladeluftverdichter im Verdichtungsbetrieb in schematischer Darstellung,
- Figur 2: den elektrisch angetriebenen Ladeluftverdichter gemäß Figur 1 im Bypassbetrieb,
- Figur 3: eine Detailansicht eines alternativen Ausführungsbeispiels eines Bypasskanals mit integriertem Klappenventil in Querschnittsdarstellung,
- Figur 4: ein weiteres Ausführungsbeispiel für einen Bypasskanal eines erfindungsgemäßen Ladeluftverdichters im Verdichterbetrieb,
- Figur 5: den Bypasskanal gemäß Figur 4 im Bypassbetrieb,
- Figur 6: eine Detailansicht eines weiteren Ausführungsbeispiels eines erfindungsgemäßen Ladeluftverdichters bei geschlossenem Bypasskanal,
- Figur 7: eine alternative Ausführungsform des im Bypasskanal gemäß Figur 6 angeordneten Ventils,
- Figur 8: einen Ladeluftverdichter gemäß Figur 6 oder 7 in Detailansicht mit einem alternativen Ventil im Bypasskanal,
- Figur 9: die Detailansicht eines Ladeluftverdichters gemäß Figur 8 mit einer alternativen Ausführungsform des Ventils im Bypasskanal,
- Figur 10: den Ladeluftverdichter gemäß Figur 6 bis 9 mit einer weiteren Ausführungsform eines Ventils für den Bypasskanal,
- Figur 11: die Darstellung des Ladeluftverdichters gemäß Figur 6 bis 10 mit einem weiteren Ausführungsbeispiel für das Bypasskanalventil.

### Beschreibung der Ausführungsbeispiele

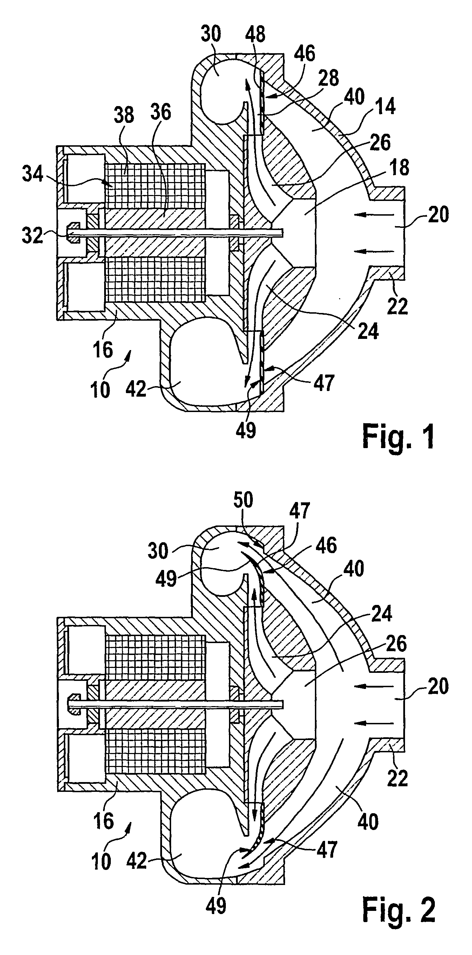

Figur 1 zeigt ein erstes Ausführungsbeispiel einer erfindungsgemäßen Vorrichtung zur Verdichtung von Verbrennungsluft in einer vereinfachten, schematisierten Gesamtdarstellung. Der Ladeluftverdichter 10 gemäß Figur 1 weist ein Gehäuse 12 auf, welches aus zwei Teilgehäusen 14 bzw. 16 aufgebaut ist. Das erste Teilgehäuse 14 umgibt den eigentlichen Verdichter 18 der erfindungsgemäßen Vorrichtung und weist, zur Ansaugung der Verdichtungsluft, einen Einlasskanal 20 auf, der im Ausführungsbeispiel der Figur 1 als ein Einlassstutzen 22 ausgebildet ist. Im Inneren des ersten Teilgehäuses 14 befindet sich ein Verdichtungsraum 24 zur Verdichtung der angesaugten Ladeluft Im Verdichtungsraum 24 ist ein in bekannter Weise ausgeformtes Verdichterrad 26 angeordnet. Die beiden Teilgehäuse sind fest miteinander verbunden, beispielsweise verschraubt, vernietet oder auch verklebt.

Im Verdichterbetrieb saugt das Verdichterrad 26 durch den Einlassstutzen 22 Luft an, die durch Beschleunigung im Verdichterrad komprimiert und radial nach außen geführt wird. Der Verdichtungsraum ist über entsprechende Verbindungsmittel 28 mit einer spiralförmig am äußeren Umfang des Verdichters verlaufenden Auslassleitung 30 (Evolute) verbunden. Diese als Hohlleitung ausgebildete Auslassleitung 30 hat näherungsweise einen runden Querschnitt, dessen Durchmesser in Umfangsrichtung der Vorrichtung stetig zunimmt.

Das Verdichterrad ist über eine Antriebswelle 32 mit einem Elektromotor 34 verbunden, der in dem zweiten Teilgehäuse 16 des Gehäuses 12 des Ladeluftverdichters eingebracht ist. Der Elektromotor 34 besitzt einen Rotor 36 sowie einen in Umfangsrichtung um den Rotor angeordneten Stator 38. Durch eine entsprechende Betätigung des Elektromotors 34 wird das Verdichterrad 26 im Verdichtungsraum 24 angetrieben, die Ladeluft durch den Einlasskanal 20 angesaugt, im Verdichterraum verdichtet und radial nach außen in den Auslasskanal 30 ( Evolute ) gedrückt. Der Verdichter des Ausführungsbeispiels der Figur 1 stellt somit einen Radialverdichter mit in Umfangsrichtung des Gehäuses 12 verlaufender, sich stetig im Durchmesser vergrößernder Schnecke dar.

Das erste Teilgehäuse 14 weist zudem einen Bypasskanal 40 auf, der eine direkte Verbindung des Einlasskanals 20 mit dem Auslasskanal 42, der im Ausführungsbeispiel der Figur 1 durch die Evolute 30 dargestellt wird, bildet. Über den Bypasskanal 40 kann Ladeluft unter Umgehung des Verdichtungsraumes 24 direkt vom Einlasskanal 20 zum Auslasskanal 42 gelangen.

Zwischen dem Bypasskanal 40 und dem Auslasskanal 42 ist ein Ventil 46 angeordnet, das im Ausführungsbeispiel der Figur 1 als ein membranartiges Ventilelement 48 ausgestaltet ist. Das Membranventil 48 kann in Form einer Tellermembran 52 aus einem entsprechenden Elastomer hergestellt sein und hat dabei die Aufgabe eines Rückschlagventilelementes, das im aktiven Zustand der erfindungsgemäßen Vorrichtung, d.h. im Verdichtungsbetrieb, infolge des Druckaufbaus des Verdichters die Membran 48 in die in Figur 1 dargestellte Schließposition drückt. Durch die angesaugte, verdichtete Ladeluft ergibt sich in den Verbindungsmitteln 28 bzw. im Auslasskanal 42 ein höherer Druck als im Bypasskanal 40, so dass das Membranventil 48 gegen einen entsprechenden Ventilsitz 50, der im Bypasskanal 40 der erfindungsgemäßen Vorrichtung ausgebildet ist, angedrückt wird. Der Bypasskanal 40 wird dadurch geschlossen. Durch eine geeignete Konstruktion kann die Membran 48 auch so gestaltet werden, dass sie zwischen den beiden Verdichtergehäusen eingespannt ist, so dass sich auf einfache Weise eine erfindungsgemäße Ventilfunktion für den Bypasskanal 40 des Zusatzverdichters ergibt. Eine solche Membran zeichnet sich durch extrem schnelle Schaltzeiten und eine hohe Zuverlässigkeit bei sehr geringen Sachaltgeräuschen, aus

Figur 2 zeigt den erfindungsgemäßen Ladeluftverdichter im inaktiven Zustand. Bei dieser Betriebsart wird das Verdichterrad 26 nicht durch den Elektromotor 34 angetrieben. Ein dem Zusatzverdichter nachgeschalteter Verdichter, beispielsweise in Form eines Abgasturboladers, saugt Verdichtungsluft durch den Einlasskanal 20 des Zusatzverdichters an. Aufgrund eines Staudruckes, der sich durch den erhöhten Strömungswiderstand des Verdichterraumes 24 mit dem darin angeordneten Verdichterrad 26 ergibt, wird die angesaugte Luft durch den großen Querschnitt des Bypasskanals 40 strömen und das Ventilelement 48 vom Ventilsitz 50 abdrücken. Auf diese Weise wird eine direkte Verbindung des Einlasskanals 20 mit dem Auslasskanal 42 im Strömungsverdichter erzeugt. Durch die großzügig gestalteten Querschnitt des Bypasskanal 40 ergibt sich ein geringer Druckverlust über dem Zusatzverdichter, falls dieser im Bypassbetrieb genutzt wird. Zudem kommt es aufgrund des Staudrucks vor dem Verdichterraum der Vorrichtung zu einer Strömung der Ladeluft durch den Verdichterraum und die Verbindungsmittel 28 in den Auslasskanal 42. Diese Strömung bewirkt in vorteilhafter Weise eine Kühlung der Verdichterkomponenten, die auf diese Weise sehr schnell wieder auf ihre Betriebstemperatur gebracht werden können.

Wird der Elektromotor und damit das Verdichterrad des Verdichters wieder aktiviert, so ergibt sich aufgrund der angesaugten und dann verdichteten Luft im Auslasskanal 42 des Verdichters ein Überdruck, der dazu führt, dass das Ventilelement 48 wieder gegen den Ventilsitz 50 gedrückt und damit der Bypasskanal 40 wunschgemäß verschlossen wird.

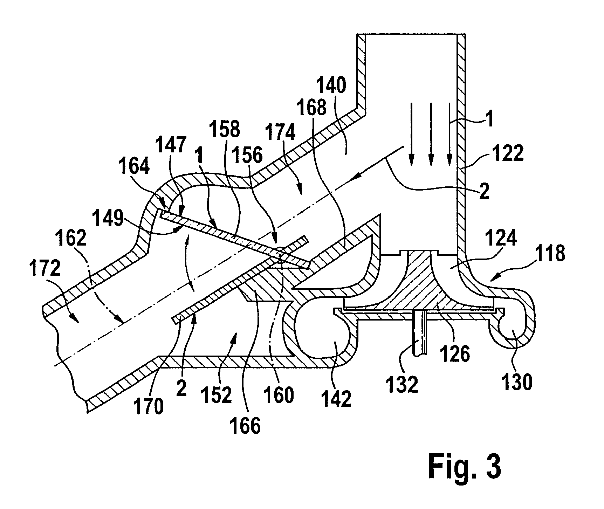

Figur 3 zeigt eine alternative Ausgestaltung für einen Bypasskanal 140 eines Zusatzverdichters. In Figur 3 sind von dem erfindungsgemäßen Zusatzverdichter lediglich der Einlassstutzen 122, der Verdichterraum 124 mit darin angeordnetem Verdichterrad 126, sowie der Auslasskanal 142 in Form einer Evolute 130 dargestellt. Der Auslasskanal 142 ist mit entsprechenden Verbindungsmitteln 152 mit der Ausgangsseite 154 des Bypasskanals verbunden. Der Bypasskanal 140 kann dabei beispielsweise einstückig mit dem Verdichtergehäuse ausgebildet sein oder aber auch nachträglich mit diesem verbunden werden.

Nicht dargestellt in Figur 3 ist der Antrieb für das Verdichterrad, der beispielsweise ebenfalls ein elektromotorischer Antrieb sein kann, der das Verdichterrad über eine entsprechende Antriebswelle 132 antreibt. Andere Antriebsaggregate für das Verdichterrad 126 sind aber ebenso möglich.

Im Bypasskanal 140 ist ein Klappenventil 156 angeordnet. Das Klappenventil 156 besitzt eine Ventilklappe 158, die auf einer Drehachse 160 drehbar gelagert ist. Die Drehachse 160 ist exzentrisch sowohl zur Längsachse 162 des Bypasskanals 140 als auch zur Lateralausdehnung der Ventilklappe 158 gelagert. Die Ventilklappe 158 wirkt mit einem Ventilsitz 164 zusammen, um bei entsprechenden Druckverhältnissen den Bypasskanal 140 zu schließen. In seiner geöffneten Stellung liegt das Klappenventil 156 mit der Ventilklappe 158 an einer Anlage 166 der Innenwand 168 des Bypasskanal 140 derart an, dass das freie Ende 170 der Ventilklappe 158 den Auslassbereich 172 des Auslasskanals 142 zumindest teilweise überstreicht. Die Anlage kann, wie im Ausführungsbeispiel der Figur 3 einstückig mit dem Bypasskanal ausgeführt sein, oder aber auch in anderen Ausführungsformen in den Bypasskanal eingesetzt und fixiert werden.

Wird der Verdichter in Betrieb gesetzt, d.h. das Verdichterrad beispielsweise durch die Antriebswelle 132 eines Elektromotors in hohe Rotation versetzt, so wird die Luft im Einlassstutzen angesaugt und es ergibt sich eine Luftströmung 01 in den Verdichterraum 124 der Vorrichtung. Die Rückschlagsklappe 158 im Bypasskanal 140 bewegt sich aus einer Ausgangsposition 2 zügig in Richtung der Position 1, da sich im Auslassbereich 172 des Verdichters ein Überdruck gegenüber dem Einlassbereich 174 des Bypasskanals 140 ergibt. Durch die exzentrische Lagerung der Ventilklappe 158 sowie das Hineinragen des in Ausgangsposition 2 befindlichen freien Klappenendes 170 in die Kernströmung des Verdichteraustritts ergibt sich eine wohl definierte Schaltfunktion. Der Bypass 140 der Vorrichtung ist damit verschlossen und verhindert eine Rückströmung der angesaugten Luft in den Einlassstutzen 122 der Verdichteranordnung. Die Strömung tritt somit ausschließlich in den Verdichter 118 bzw. dessen Verdichterraum 124 ein, ohne diesen zu umströmen.

Ist der Verdichter außer Betrieb, so führt das dem Leitungssystem der Vorrichtung ausgeprägte Druckgefälle automatisch zu einer Bewegung der Ventilklappe 158 in die Position 2. Der Bypasskanal 140 wird dabei vollständig geöffnet. Während des Bypassbetriebs der Vorrichtung stellt sich aufgrund des erhöhten Strömungswiderstandes des Verdichterraumes im Einlassstutzen ein Luftstau ein, der auch zu einer partiellen Durchströmung des Verdichterraumes des abgeschalteten Verdichters führt, wie dies mit den Pfeilen 02 in Figur 3 angedeutet sein soll. Somit erfolgt auch ohne externen Antrieb eine erzwungene, konvektive Kühlung der aggregatnahen Oberflächen der erfindungsgemäßen Vorrichtung.

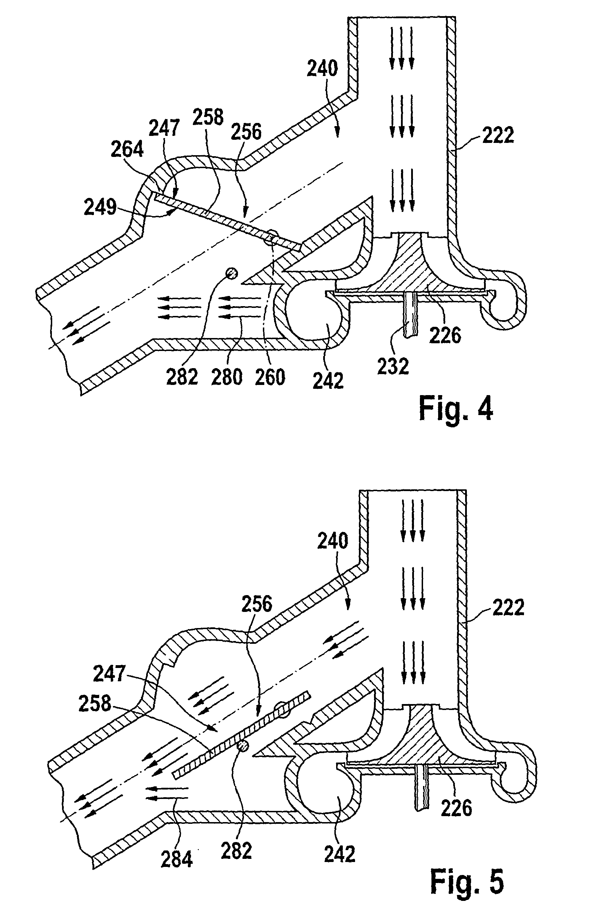

Figur 4 zeigt ein alternatives Ausführungsbeispiel für einen erfindungsgemäßen Bypasskanal eines Zusatzverdichters. Es sei hier lediglich auf die Unterschiede zu dem Ausführungsbeispiel gemäß Figur 3 hingewiesen, die prinzipiell gleichwirkende Funktion des Bypasskanals gemäß Figur 4 bzw. Figur 5 sei nicht nochmals beschrieben. Im Bypasskanal 240 der erfindungsgemäßen Vorrichtung gemäß Figur 4 befindet sich ebenfalls ein Klappenventil 256, welches aus einer exzentrisch gelagerten Ventilklappe 258 und einem einstückig mit dem Bypasskanal ausgeführten Ventilsitz 264 besteht. In geschlossener Stellung des Bypasskanals, d.h. bei aktiviertem Verdichterbetrieb, wird die Ventilklappe 258 aufgrund des Drucks der verdichteten Luftströmung gemäß den Pfeilen 280 gegen den Ventilsitz 256 gedrückt und der Bypasskanal 240 damit sicher verschlossen.

Wird der Verdichter deaktiviert, so ergibt sich aufgrund des erhöhten Strömungswiderstandes über den Verdichter eine starke Luftströmung durch den Bypasskanal 240, so dass die Ventilklappe 258 geöffnet und gegen eine Anschlagsposition 282 gedrückt wird, wie dies in Figur 5 dargestellt ist. Die spezielle Ausgestaltung des Klappenventils 256 gemäß Figur 4 bzw. Figur 5 ermöglicht einen geringen Strömungswiderstand des sich im Bypasskanal 240 befindenden Ventilelements 256. Diese Formgebung des Ventilelements 256 bzw. die dadurch ermöglichten großen Strömungsquerschnitte, die mit dem erfindungsgemäßen Bypasskanal realisieren lassen, ermöglichen eine aerodynamisch verlustarme Ausführung des Bypassbetriebes für die erfindungsgemäße Vorrichtung. In bereits beschriebener Form sorgt ein, sich im Einlassstutzen 222 einstellende Staudruck bei deaktiviertem Verdichterrad 226 zum Einen die selbsttätige Öffnung des im Bypasskanal 240 angeordneten Ventilelementes 256, zum Anderen führt dieser Staudruck zu einer partiellen Durchströmung des abgeschalteten Verdichters, wie es mit den Pfeilen 284 in Figur 5 angedeutet sein soll.

Aufgrund der geringen Massenträgheit der Rückschlagklappe 258 ergibt sich eine hohe Stellgeschwindigkeit, verbunden mit einer hohen Stellsicherheit, insbesondere bei nahezu zentraler Anordnung der Rückschlagklappendrehachse 260. Durch Verwendung geeigneter Auswuchtverfahren für die Rückschlagsklappe 258 kann ein nahezu einbaulagenunabhängiges Schaltverhalten für das Ventil des Bypasskanals 240 herbeigeführt werden.

Dadurch, dass der Bypasskanal 240 im Wesentlichen tangential von dem Einlassstutzen 222 des Verdichters abzweigt, ist es möglich, einen großflächigen, thermischen Kontakt zwischen dem Bypasskanal und einem, das Verdichterrad 226 antreibenden Motor bzw. dessen Motorgehäuses zu realisieren. Somit lassen sich die Vorteile einer aerodynamisch verlustarmen Strömungsführung aufgrund der großen Strömungsquerschnitte des Bypassbetriebes vereinen mit einer entsprechenden Strömungskühlung für das antreibende Aggregat.

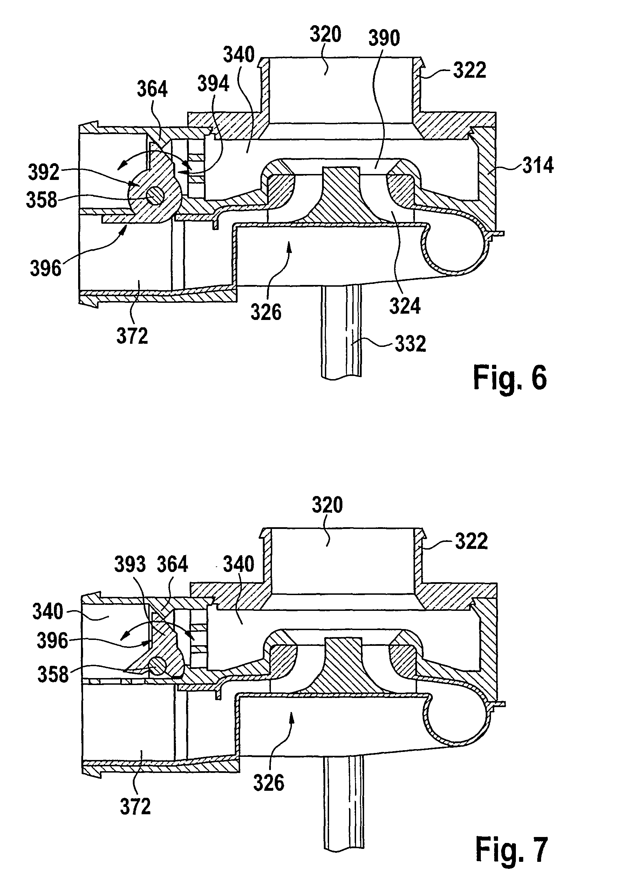

Figur 6 zeigt ein alternatives Ausführungsbeispiel eines erfindungsgemäßen Zusatzverdichters für die Ladeluft eines Kraftfahrzeuges, von dem lediglich der Verdichterkopf dargestellt ist. Das Verdichterrad 326 wird über eine in der Figur nur angedeutete Welle und ein nicht weiter dargestelltes, entsprechendes Antriebsaggregat angetrieben. Das Verdichterrad 326 ist in einem ersten Teilgehäuse 314 angeordnet, welches sowohl den Bypasskanal 340 als auch den Verdichtungsraum 324 umgibt. Das Gehäuse 314 des Verdichterkopfes der erfindungsgemäßen Vorrichtung gemäß dem Ausführungsbeispiel nach Figur 6 weist einen Einlasskanal 320 in Form eines Einlassstutzens 322 auf, der in den Bypasskanal 340 mündet. Der Bypasskanal 340 ist dabei im Wesentlichen rechtwinklig zum Einlassstutzen 322 ausgebildet. Ferner steht der Einlasskanal 320 in Strömungsverbindung mit dem Verdichterraum 324, in welchem das Verdichterrad 326 angeordnet ist. Über eine Einlassöffnung 390 des Verdichterraumes ergibt sich eine Verbindung vom Einlasskanal 320 über den Verdichtungsraum 324 zu einem Auslasskanal 372, der in den Bypasskanal 340 mündet.

Im Bypasskanal 340 ist ein um eine Drehachse 358 drehbar gelagertes Ventilelement 392 angeordnet, welches mit einer ersten Schaltfläche 394 in den Volumenstrom des Bypasskanals 340 ragt. Eine zweite Schaltfläche 396 ist im Auslasskanal 372 der Vorrichtung angeordnet. Durch die sich an den Schaltflächen einstellenden Druckdifferenzen, kann das Ventilelement 392 in gewünschter Weise betätigt werden. So wird durch Beaufschlagung der zweiten Schaltfläche mit einem Volumenstrom der verdichteten Ladeluft im Falle des Verdichterbetriebes das Ventilelement 392 gegen einen Ventilsitz 364 gedrückt, so dass der Bypasskanal verschlossen wird. Eine Rückströmung der verdichteten Luft aus dem Auslasskanal 372 über den Bypasskanal 340 in den Einlassstutzen 322 ist somit verhindert.

Bei deaktiviertem Verdichter sorgt der erhöhte Strömungswiderstand über das Verdichterrad, dass der Druck an der ersten Schaltfläche 394 des Ventilelementes 392 den entsprechenden Druck an der zweiten Schaltfläche überwiegt, so dass das Ventilelement vom Ventilsitz 364 abgehoben wird und der Bypasskanal geöffnet wird.

Gleichzeitig wird dadurch bei dem Ventilelement 392 nach dem Ausführungsbeispiel der Figur 6 der Auslasskanal 372 durch die zweite Schaltfläche 396 verschlossen.

Figur 7 zeigt eine alternative Ausgestaltung des Ventilelementes 392 gemäß Figur 6. Das Ventilelement 393 hat den Vorteil, dass im Bypassbetrieb, d.h. bei geöffnetem Bypasskanal, der Auslasskanal 372 des Verdichters nicht verschlossen wird. Auf diese Weise ist es möglich, eine entsprechende partielle Durchströmung des Verdichterraumes zur Kühlung des Verdichters auch bei abgeschaltetem Verdichter zu erreichen. Im Betrieb des Verdichters, d.h. bei aktiviertem Verdichterrad, führt der im Auslasskanal 372 des Verdichters vorhandene Druck zu einem entsprechenden Stellmoment auf eine zweite Schaltfläche 397 des Ventilelementes 393. Ist dieser Druck auf die zweite Schaltfläche 397 größer als ein entsprechender Druck auf die erste Schaltfläche 395, so wird das Ventilelement 393 gegen den Ventilsitz 364 gedrückt und der Bypasskanal 340 verschlossen.

Im Folgenden seien noch einige weitere vorteilhafte Ausführungsformen für ein Ventilelement des Bypasskanals der erfindungsgemäßen Vorrichtung vorgestellt. Auf die Vorrichtung selbst und insbesondere den Verdichter soll dabei nicht mehr näher eingegangen werden, da der Aufbau dem bereits beschriebenen Aufbau gemäß Figur 6 bzw. Figur 7 entspricht.

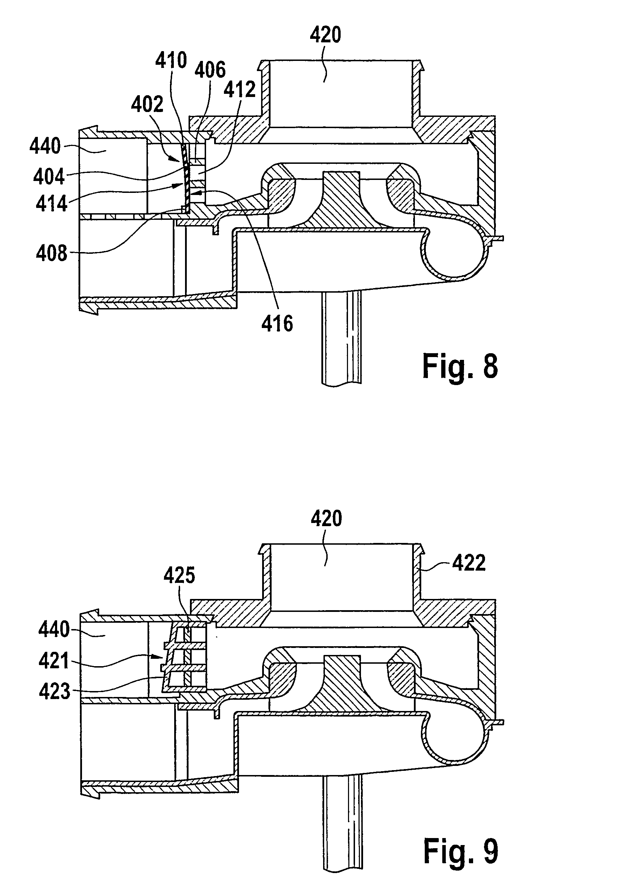

Figur 8 zeigt ein Ventilelement 402, welches einen elastischen Ventilkörper 404 und einen, im Durchmesser des Bypasskanals 340 angeordneten Ventilsitz 406 aufweist. Der Ventilkörper 402 , der beispielsweise in Form einer Gummischeibe oder Membran ausgebildet sein kann, ist an seinem einen Ende über Verbindungsmittel 408 mit dem Ventilsitz verbunden und kann mit seinem anderen, freien Ende 410 vom Ventilsitz 406 abgehoben werden. Der Ventilsitz 406 ist im Querschnitt des Bypasskanals 340 angeordnet und besitzt eine perforierte Struktur, die eine Vielzahl von Strömungsöffnungen 412 aufweist, die im Betriebsfall des Verdichters durch den auf den Ventilsitz angedrückten Ventilkörper 404 verschlossen werden. Das Ventilelement 402 des Bypasskanals 340 der erfindungsgemäßen Vorrichtung gemäß dem Ausführungsbeispiel der Figur 8 stellt somit ein elastisches Rückschlagventil dar, das durch Beaufschlagung seiner beiden Schaltflächen mit einem durch einen entsprechenden Volumenstrom erzeugten Druck geöffnet bzw. geschlossen wird.

Figur 9 zeigt eine alternative Ausgestaltung des Ventilelementes für den Bypasskanal 440 der erfindungsgemäßen Vorrichtung auf. Das Ventilelement 421 gemäß dem Ausführungsbeispiel der Figur 4 besitzt einen, in einer Führung 423 verschiebbaren Ventilkörper 425. Der Ventilkörper 425 besteht beispielsweise aus einer verschiebbaren Membran oder Platte, deren laterale Position durch die Führungsstruktur 423 gesichert ist. Die Führung 423 im Ausführungsbeispiel des erfindungsgemäßen Verdichters gemäß Figur 9 ist als ein Käfig ausgebildet und kann in voiteilhafter Weise mit einem Gleitmittel beschichtet sein, um ein Verkanten des Ventilkörpers 425 zu vermeiden.

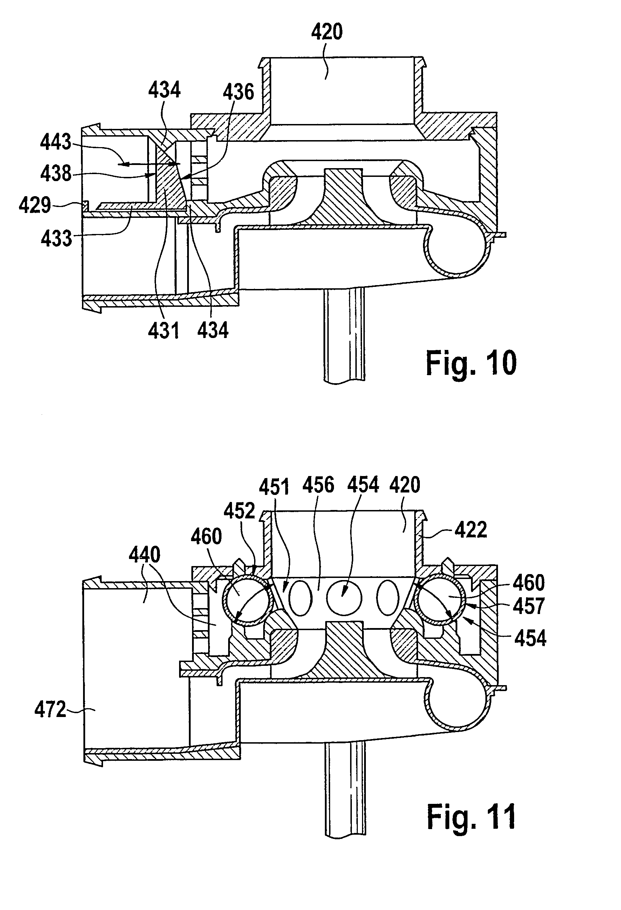

Das Ausführungsbeispiel gemäß Figur 10 besitzt einen Ventilkörper 431, der verschiebbar im Bypasskanals 340 angeordnet ist. Über eine Gleitfläche 433, die am Ventilkörper 431 ausgebildet ist, kann der Ventilkörper 431 im Bypasskanal 340 verschoben werden. Im geschlossenen Zustand des Bypasskanals 340 kommt der Ventilkörper 431 zur Anlage an einen Ventilsitz 434, so dass der Bypasskanal 440 strömungsdicht verschlossen wird. Bei deaktiviertem Verdichter wird der Bypasskanal 440 durch eine entsprechende Druckdifferenz an den beiden Schaltflächen 436 und 438 des Ventilkörpers 431 durch die Verschiebung des Ventilkörpers 431 geöffnet. Der Verschiebeweg des Ventilskörpers 431 ist in Öffnungsrichtung 443 durch ein Stopelement 429 für den Gleitkörper 433 begrenzt. Das Ausführungsbeispiel gemäß Figur 10 stellt somit ein großflächiges Kegelventil mit axial verschiebbarem Ventilkörper 43 1 dar.

Im Ausführungsbeispiel der erfindungsgemäßen Vorrichtung gemäß der Figur 11 wird das Ventilelement 450 im Bypasskanal 440 durch eine Mehrzahl einzelner Kugelventile 452 realisiert. Der Einlassstutzen 422 des Einlasskanals 420 besitzt eine Mehrzahl von Öffnungen 454, die am inneren Umfang 456 des Einlassstutzens 422 ausgebildet sind, und die eine Verbindung zwischen dem Einlasskanal 420 und dem Bypasskanal 440 herstellen. Die Öffnungen 454 stellen gleichzeitig jeweils den Ventilsitz für je ein Kugelventil 452 dar. Der Ventilkörper 458 wird in diesem Ausführungsbeispiel durch eine Mehrzahl von Kugeln, insbesondere Hohlkugeln 460, gebildet, die durch entsprechende Druckverhältnisse in die Ventilöffnungen 454 eingedrückt bzw. aus diesen herausgedrückt werden. Die Schaltflächen zur Betätigung des Ventils des Bypasskanal 440 fallen in diesen Ausführungsbeispiel zusammen und werden durch beide durch die Oberflächen 457 der Kugeln gebildet

Der erfindungsgemäße Zusatzverdichter nach den Ausführungsbeispielen der Figuren 6 - 11 zeichnet sich durch eine hohe Integration und damit durch eine sehr kompakte Bauweise aus.

Die erfindungsgemäße Vorrichtung zur Verdichtung von Verbrennungsluft ist nicht auf die in den Zeichnungen präsentierten Ausführungsbeispiele beschränkt.

Insbesondere ist die erfindungsgemäße Vorrichtung nicht beschränkt auf einen Radialverdichter.

Die erfindungsgemäße Vorrichtung ist nicht beschränkt auf die Verwendung nur eines Verdichterrades im Verdichteiteil der Vorrichtung.

## Patentansprüche

1. Vorrichtung zur Verdichtung von Verbrennungsluft, insbesondere eine solche Vorrichtung für eine kraftfahrzeugtechnische Verbrennungsmaschine, mit einen Gehäuse (12,112,212,312,412), mit mindestens einem in das Gehäuse (12,112,212,312,412) hinein führenden Lufteinlass (20,120,220,320,420) und mit mindestens einem, aus dem Gehäuse (12,112,212,312,412) heraus führenden Luftauslass (42,142,342,442), sowie mit mindestens einem, in einem Verdichterraum (24,124,224,324,424) des Gehäuses (12,112,212, 312,412) angeordneten, von einer Welle (32,132,232,332,432) angetriebenen Verdichterrad (26,126,226,326,426), welches in Strömungsrichtung zwischen dem mindestens einen Lufteinlass (42,142,342,442) und dem mindestens einen Luftauslass (42,142,342,442) des Gehäuses (12,112,212, 312,412) angeordnet ist, **dadurch gekennzeichnet, dass** das Gehäuse (12,112,212,312,412) über mindestens einen im Gehäuse integrierten Bypasskanal (40,140,240,340,440) verfügt, der den mindestens einen Einlasskanal (20,120,220,320,420) mit dem mindestens einen Auslasskanal (42,142,342,442) unter Umgehung des Verdichterraumes (24,124,224, 324,424) verbindet, wobei der Bypasskanal (40,140,240,340,440) ein selbststellendes Ventil (46,156,256,392,393, 402,421,431,450) aufweist, das es ermöglicht, dass Ladeluft über den Bypasskanal unter Umgehung des Verdichterraumes direkt vom Einlasskanal des Gehäuses zum Auslasskanal des Gehäuses gelangt.

2. Vorrichtung nach Anspruch 1, **dadurch gekennzeichnet, dass** sich das Ventil (46,156,256,392,393,402,421,431,450) aufgrund einer Druckdifferenz des Fördervolumenstroms zwischen dem Auslasskanal (42,142,342,442) und dem Einlasskanal (20,120,220,320,420) zwischen einer ersten Position die den Bypass-Kanal (40,140,240,340,440) verschließt und einer zweiten Position, die den Bypass-Kanal (40,140,240,340,440) öffnet, selbsttätig stellt.

3. Vorrichtung nach Anspruch 1 oder 2, **dadurch gekennzeichnet, dass** das selbststellende Ventil (46,156,256,392,393,402,421,431,450) eine erste Schaltfläche (47, 147,247,394,436,457) besitzt, die von einem Volumenstrom des Bypasskanals (40,140,240,340,440) beaufschlagbar ist, und eine zweite Schaltfläche (49,149,249, 396,498,457) besitzt, die von einem Volumenstrom des Auslasskanals (42,142,342, 442) beaufschlagbar ist.

4. Vorrichtung nach einem der vorhergehenden Ansprüche, **dadurch gekennzeichnet, dass** der Bypasskanal (40,140,240,340,440) von einem in axialer Richtung verlaufenden, den Einlasskanal (20,120,220,320,420) der Vorrichtung bildenden Einlassstutzen (22,122,222,322,422) des Gehäuses (12,112,212,312,412) abzweigt.

5. Vorrichtung nach Anspruch 4, **dadurch gekennzeichnet, dass** der Bypasskanal (40,140,240) im Wesentlichen tangential von dem Einlassstutzen (22,122,222,322,422) abzweigt.

6. Vorrichtung nach Anspruch 4, **dadurch gekennzeichnet, dass** der Bypasskanal (340,440) im Wesentlichen senkrecht von dem Einlassstutzen (22,122,222,322,422) abzweigt.

7. Vorrichtung nach einem der vorhergehenden Ansprüche, **dadurch gekennzeichnet, dass** hochdruckseitige Auslasskanal (42,142,342,442) der Vorrichtung in den Bypasskanal (40,140,240,340,440) mündet.

8. Vorrichtung nach einem der vorhergehenden Ansprüche, **dadurch gekennzeichnet, dass** das Ventil (46,156,256,392,393,402,421,431,450) ein Klappenventil (156,256,392,393,) ist.

9. Vorrichtung nach Anspruch 8, **dadurch gekennzeichnet, dass** die Drehachse (160,260,358) der Ventilklappe (158,258,392) exzentrisch gelagert ist.

10. Vorrichtung nach einem der vorhergehenden Ansprüche 1 bis 7, **dadurch gekennzeichnet, dass** das Ventil (46,156,256,392,393,402,421,431,450) ein Membranventil (46,402,425) ist.

11. Vorrichtung nach einem der vorhergehenden Ansprüche 1 bis 7, **dadurch gekennzeichnet, dass** das Ventil ein Kugelventil (450) ist.

12. Vorrichtung nach einem der vorhergehenden Ansprüche, **dadurch gekennzeichnet, dass** der Bypasskanal (40,140,240,340,440) einstückig mit dem Gehäuse (12,112,212,312,412) der Vorrichtung ausgebildet ist.

13. Vorrichtung nach einem der vorhergehenden Ansprüche**, dadurch gekennzeichnet, dass** das Verdichterrad (26,126,226,326,426) von einem in einem Gehäuse (12,16,112,212,312,412) der Vorrichtung integrierten Motor, insbesondere einem Elektromotor (34) getrieben ist.

14. Vorrichtung nach Anspruch 13, **dadurch gekennzeichnet, dass** der Elektromotor (34) in Strömungsrichtung des Fördermediums hinter dem Verdichterrad (26,126,226,326,426) angeordnet ist und in thermischer Verbindung mit dem Bypasskanal (40,140,240,340,440) steht,

## Claims

1. Device for compressing combustion air, in particular a device of said type for a motor vehicle internal combustion engine, having a housing (12,112,212,312,412), having at least one air inlet (20,120,220,320,420) which leads into the housing (12,112,212,312,412), and having at least one air outlet (42,142,342,442) which leads out of the housing (12,112,212,312,412), and having at least one compressor wheel (26,126,226,326,426) which is arranged in a compressor space (24,124,224,324,424) of the housing (12,112,212,312,412) and is driven by a shaft (32,132,232,332,432), which compressor wheel (26,126,226,326,426) is arranged in the flow direction between the at least one air inlet (20,120,220,320,420) and the at least one air outlet (42,142,342,442) of the housing (12,112,212,312,412), **characterized in that** the housing (12,112,212,312,412) has at least one bypass duct (40,140,240,340,440) which is integrated in the housing and which connects the at least one inlet duct (20,120,220,320,420) to the at least one outlet duct (42,142,342,442) while bypassing the compressor space (24,124,224,324,424), with the bypass duct (40,140,240,340,440) having a self-adjusting valve (46,156,256,392,393,402,421,431,450) which makes it possible for charge air to pass directly from the inlet duct of the housing to the outlet duct of the housing via the bypass duct while bypassing the compressor space.

2. Device according to Claim 1, **characterized in that** the valve (45,156,256,392,393,402,421,431,450), on account of a pressure difference of the feed volume flow between the outlet duct (42,142,342,442) and the inlet duct (20,120,220,320,420), is automatically adjusted between a first position, which closes the bypass duct (40,140,240,340,440), and a second position, which opens the bypass duct (40,140,240,340,440).

3. Device according to Claim 1 or 2, **characterized in that** the self-adjusting valve (46,156,256,392,393,402,421,431,450) has a first switching face (47,147,247,394,436,457) which can be acted on by a volume flow of the bypass duct (40,140,240,340,440), and a second switching face (49,149,249,396,498,457) which can be acted on by a volume flow of the outlet duct (42,142,342,442).

4. Device according to one of the preceding claims, **characterized in that** the bypass duct (40,140,240,340,440) branches off from an inlet connecting piece (22,122,222,322,422), which runs in the axial direction and forms the inlet duct (20,120,220,320,420) of the device, of the housing (12,112,212,312,412).

5. Device according to Claim 4, **characterized in that** the bypass duct (40,140,240) branches off substantially tangentially from the inlet connecting piece (22,122,222,322,422).

6. Device according to Claim 4, **characterized in that** the bypass duct (340,440) branches off substantially perpendicularly from the inlet connecting piece (22,122,222,322,422).

7. Device according to one of the preceding claims, **characterized in that** the high-pressure-side outlet duct (42,142,342,442) of the device opens out into the bypass duct (40,140,240,340,440).

8. Device according to one of the preceding claims, **characterized in that** the valve (46,156,256,392,393,402,421,431,450) is a flap valve (156,256,392,393).

9. Device according to Claim 8, **characterized in that** the rotational axis (160,260,358) of the valve flap (158,258,392) is mounted eccentrically.

10. Device according to one of the preceding Claims 1 to 7, **characterized in that** the valve (46,156,256,392,393,402,421,431,450) is a diaphragm valve (46,402,425).

11. Device according to one of the preceding Claims 1 to 7, **characterized in that** the valve is a ball valve (450).

12. Device according to one of the preceding claims, **characterized in that** the bypass duct (40,140,240,340,440) is formed in one piece with the housing (12,112,212,312,412) of the device.

13. Device according to one of the preceding claims, **characterized in that** the compressor wheel (26,126,226,326,426) is driven by a motor, in particular an electric motor (34), which is integrated in a housing (12,16,112,212,312,412) of the device.

14. Device according to Claim 13, **characterized in that** the electric motor (34) is arranged in the flow direction of the feed medium downstream of the compressor wheel (26,126,226,326,426), and is thermally connected to the bypass duct (40,140,240,340,440).

## Revendications

1. Dispositif de compression de l'air comburant, notamment destine à un dispositif pour des moteurs à combustion dans le domaine des véhicules automobiles, comprenant un boîtier (12, 112, 212, 312, 412) avec une entrée d'air (20, 120, 220, 320, 420) installée dans le boîtier (12, 112, 212, 312, 412), au moins une sortie d'air (42, 142, 342, 442) sortant du boîtier (12, 112, 212, 312, 412) et au moins un rotor de compresseur (21) logé dans la chambre de compression (24, 124, 224, 324, 424) du boîtier (12, 112, 212, 312, 412) en étant entraîné par un arbre (32, 132, 232, 332, 432), ce rotor de compresseur, installé dans le sens de passage du flux entre au moins une entrée d'air (20, 120, 220, 320, 420) et au moins une sortie d'air (42, 142, 342, 442) du boîtier (12, 112, 212, 312, 412),
**caractérisé en ce que**
le boîtier (12, 112, 212, 312, 412) dispose d'au moins un canal de dérivation (40, 140, 240, 340, 440) intégré au boîtier, ce canal ayant au moins un canal d'entrée (20, 120, 220, 320, 420) avec au moins un canal de sortie (42, 142, 342, 442) contournant la chambre de compression (24, 124, 224, 324, 424), le canal de dérivation (40, 140, 340, 440) ayant une soupape auto-réglée (46, 156, 256, 392, 393, 402, 421, 431, 450) permettant à l'air d'alimentation de passer par le canal de dérivation en contournant la chambre de compression, pour arriver directement du canal d'admission du boîtier au canal de sortie du boîtier.

2. Dispositif selon la revendication 1,
**caractérisé en ce que**
la soupape (46, 156, 256, 392, 393, 402, 421, 431, 450) se règle automatiquement en fonction de la différence de pression entre le débit volumique, entre le canal de sortie (42, 142, 342, 442) et le canal d'entrée (20, 120, 220, 320, 420), entre une première position qui ferme le canal de dérivation (40, 140, 240, 340, 440) et une seconde position qui ouvre le canal de dérivation (40, 140, 240, 340, 440).

3. Dispositif selon la revendication 1 ou 2,
**caractérisé en ce que**
la soupape auto-réglée (46, 156, 256, 392, 393, 402, 421, 431, 450) a une première surface de commutation (47, 147, 247, 394, 436, 457) sollicitée par le débit volumique du canal de dérivation (40, 140, 240, 340, 440) et une seconde surface de commutation (49, 149, 249, 396, 498, 457) sollicitée par le débit volumique du canal de sortie (42, 142, 342, 442).

4. Dispositif selon l'une des revendications précédentes,
**caractérisé en ce que**
le canal de dérivation (40, 140, 240, 340, 440) dérive d'un ajutage d'entrée (22, 122, 222, 322, 422) du boîtier (12, 112, 212, 312, 412) passant dans la direction axiale et formant le canal d'entrée (20, 120, 220, 320, 420) du dispositif.

5. Dispositif selon la revendication 4,
**caractérisé en ce que**
le canal de dérivation (40, 140, 240) dérive essentiellement tangentiellement de l'ajutage d'entrée (22, 122, 222, 322, 422).

6. Dispositif selon la revendication 4,
**caractérisé en ce que**
le canal de dérivation (340, 440) dérive pratiquement perpendiculairement de l'ajutage d'entrée (22, 122, 222, 322, 422)

7. Dispositif selon l'une des revendications précédentes,
**caractérisé en ce que**
le canal de sortie, côté haute pression (42, 142, 342, 442) du dispositif débouche dans le canal de dérivation (40, 140, 240, 340, 440).

8. Dispositif selon l'une des revendications précédentes,
**caractérisé en ce que**
la soupape (46, 156, 256, 392, 393, 402, 421, 431, 450) est une soupape à clapet (156, 256, 392, 393).

9. Dispositif selon la revendication 8,
**caractérisé en ce que**
l'axe de rotation (160, 260, 358) de la soupape à clapet (158, 258, 392) est monté de manière excentrée.

10. Dispositif selon l'une des revendications précédentes 1 à 7,
**caractérisé en ce que**
la soupape (46, 156, 256, 392, 393, 402, 421, 431, 450) est une soupape à membrane (46, 402, 425).

11. Dispositif selon l'une des revendications précédentes 1 à 7,
**caractérisé en ce que**
la soupape est une soupape à bille (450).

12. Dispositif selon l'une des revendications précédentes,
**caractérisé en ce que**
le canal de dérivation (40, 140, 240, 340, 440) fait corps avec le boîtier (12, 112, 212, 312, 412) du dispositif.

13. Dispositif selon l'une des revendications précédentes,
**caractérisé en ce que**
le rotor de compresseur (26, 126, 226, 326, 426) est entraîné par un moteur intégré dans un boitier (12, 16, 112, 212, 312, 412) du dispositif, notamment un moteur électrique (34).

14. Dispositif selon la revendication 13,
**caractérisé en ce que**
le moteur électrique (34) se trouve en aval du rotor de compresseur (26, 126, 226, 326, 426) dans le sens de passage du fluide refoulé et en liaison thermique avec le canal de dérivation (40, 140, 240, 340, 440).
